# EUROPÄISCHE PATENTSCHRIFT

(11) **EP 2 077 303 B1**
(45) Veröffentlichungstag und Bekanntmachung des Hinweises auf die Patenterteilung: **12.08.2009**
(21) Anmeldenummer: 07121436.5
(22) Anmeldetag: 23.11.2007
(51) Int. Cl.: C09D 7/00, C09D 1/00

(54) **Beschichtungsmasse für den Automobilbau**
Coating compound for automobile manufacture
Masse de revêtement pour la construction d'automobile

(43) Veröffentlichungstag der Anmeldung: 08.07.2009
(73) Patentinhaber: Eftec Europe Holding AG, 6304 Zug (CH)
(72) Erfinder: Seitzer, Joachim, 8596 Scherzingen (CH); Lauchenauer, Max, 9326 Horn (CH); Sommer, Heinrich, 9108 Gonten (CH)
(74) Vertreter: Hepp, Dieter

(56) Entgegenhaltungen:
- WO-A-20/05061608
- US-A1- 2005 137 291

## Beschreibung

Die vorliegende Erfindung betrifft Beschichtungsmassen für den Automobilbau, die zur Schall- und Schwingungsdämpfung geeignet sind.

Zur Dämpfung von Schall und Schwingungen, insbesondere von Umgebungs-, Abroll- und Motorgeräuschen und -schwingungen werden heute zunehmend spritzbare Zusammensetzungen verwendet, die durch Robotereinsatz auf die Karosserie aufgebracht werden können. Im Vergleich zu vorgeschnittenen und/oder vorgeformten Dämpfungsmatten ergibt sich durch spritzbare Zusammensetzungen eine erheblich Arbeits- und Kostenersparnis sowie eine erhöhte Flexibilität in der Applikation.

Die spritzbaren Zusammensetzungen enthalten eine flüchtige Komponente; vorzugsweise handelt es sich um wässrige Dispersionen, aus welcher das Wasser nach dem Auftragen verdampft. Typischerweise wird die Verdampfung der flüchtigen Komponente solcher Zusammensetzungen in der Automobilindustrie heute in den Durchlauföfen für die Einbrennung des Lackes vollzogen. Derartige Durchlauföfen werden i.d.R. bei einer Temperatur von 100°C bis 180°C betrieben; beim Eintritt der Karosserie in den Ofen heizt sich die Oberfläche um jedenfalls > 10°C/min, typischerweise um 30°C/min auf. Ein Hauptproblem hierbei ist die Blasenbildung der Beschichtungszusammensetzungen durch den raschen, unkontrollierten Austritt der flüchtigen Komponente (auch *"Einbrenneffekt"* genannt). Die entstehenden Blasen platzen auf der Oberfläche und führen zu einer unregelmässigen Oberflächenstruktur, im Extremfall zu einem unterbrochenen Auftragsbild oder zu Rissbildungen in der akustisch wirksamen Beschichtung.

Ferner weisen bekannte Beschichtungsmassen im Zuge der Trocknung eine Dickenausdehnung der Beschichtung im Bereich von 50% bis 150% auf. Eine derartige Zunahme der Dicke der Beschichtung ist oftmals nicht zu tolerieren, bspw. beim Auftrag von Beschichtungsmassen im Innenraum unter Verkleidungen oder Teppichen, wo der zur Verfügung stehende Raum für die Beschichtungsmasse stark begrenzt ist. Während bei der Trocknung von wasserbasierten Beschichtungsmassen bei Raumtemperatur oder im leicht erhöhten Temperaturbereich Volumenschwund durch Verlust des Wasseranteils festzustellen ist, erfolgt bei Trocknung der bekannten Beschichtungsmassen im Temperaturbereich > 100°C Expansion durch Übergang von Wasser in den gasförmigen Zustand und dadurch bedingtes Aufblähen bzw. Aufschäumen der Massen.

Das Dokument US 2005/0137291 A1 beschreibt Beschichtungsmassen mit verbesserter Rostbeständigkeit und Erscheinungsbild, die bestimmte Füllstoffe aufweisen.
Das Dokument WO 2005/061608 A1 beschreibt Beschichtungen mit geringer Gasdurchlässigkeit und relativ hoher Flexibilität

Es ist daher eine Aufgabe der vorliegenden Erfindung, die Nachteile des Bekannten zu vermeiden, insbesondere also eine Beschichtungsmasse zur Schall- und Schwingungsdämpfung im Automobilbau bereitzustellen, welche den Einbrenneffekt vermindert bzw. vermeidet sowie insbesondere eine möglichst geringe Zunahme der Dicke bei der Trocknung aufweist.

Die Aufgabe wird gelöst durch eine Beschichtungsmasse, ein Verfahren zur Herstellung einer solchen Beschichtungsmasse sowie ein Verfahren zur Dämpfung der Schallübertragung unter Verwendung einer solchen Beschichtungsmasse gemäss den Merkmalen der unabhängigen Patentansprüche.

Die Beschichtungsmasse für den Automobilbau gemäss der Erfindung weist eine Gasbeladung im Nasszustand von 5 Vol.% bis 60 Vol.% auf, vorzugsweise von 10 Vol.% bis 50 Vol.%, besonders bevorzugt von 15 Vol.% bis 40 Vol.%.

Eine derartige Gasbeladung kann vorzugsweise mit Umgebungsluft erfolgen, bspw. durch mechanisches Einmischen von Luft in handelsüblichen Mischern. Die Gasbeladung liegt insbesondere in Form fein verteilter Bläschen vor. Die Gasbeladung kann über die Ermittlung der Dichte nach DIN EN ISO 2811 leicht berechnet werden. Ist die Dichte der Zusammensetzung bekannt, so kann über die Gleichung V₁ = m₁/ρ₁ das Volumen berechnet werden und somit der Luftanteil in der Beschichtungsmasse. Dabei ist:
V₁ = Volumen (ohne Gasbeladung);
m₁ = Masse von V₁ (ohne Gasbeladung);
ρ₁ = spezifische Dichte der Zusammensetzung (ohne Gasbeladung).

Wird nun ein Gas, insbesondere Luft, in die Beschichtungsmasse eingearbeitet, so nimmt das Volumen der Zusammensetzung zu (V₂). Aus diesem Volumenzuwachs (V₂-V₁) wird die prozentuale Gasbeladung errechnet.

Vorzugsweise beruht die Gasbeladung im Rahmen der Erfindung auf einem mechanischen Einmischen von Gas, insbesondere Luft, also nicht bspw. auf der Anwesenheit eines physikalischen oder chemischen Expansionsmittels; mit derartigen Expansionsmitteln ist die Schichtdickenzunahme kaum einstellbar und insbesondere bei der Trocknung in Durchlauföfen erheblich, jedenfalls grösser als 50%.

Weiter vorteilhaft enthält die Beschichtungsmasse einen die Schichtdickenzunahme beim Übergang vom Nasszustand in den Trockenzustand verringernden Füllstoff, vorzugsweise einen Aluminiumsilikat basierten Füllstoff.

Unter dem *"Nasszustand"* wird vorliegend der Zustand der Beschichtungsmasse verstanden, in welchem sie aufgetragen wird, also vor der Verdunstung des Trägermediums, also des Lösungs-oder insbesondere des Dispergiermittels, typischerweise des Wassers.

Als *"Trockenzustand"* wird vorliegend der Zustand der Beschichtungsmasse verstanden, in welchem der Restfeuchtegehalt (Lösungs- oder Dispergiermittel) < 2 Gew.% beträgt, vorzugsweise < 1 Gew.%.

Unter einem *"Aluminiumsilikat basierten Füllstoff"* wird vorliegend ein solcher Füllstoff verstanden, welcher mehr als 50 Gew.%, vorzugsweise mehr als 60 Gew.%, besonders bevorzugt mehr als 70 Gew.% echte Aluminiumsilikate aufweist, also Verbindungen mit unterschiedlichen Anteilen Al₂O₃ und SiO₂, bei welchen Si immer tetraedrisch von 4 Sauerstoff-Atomen umgeben ist, während Al in oktaedrischer Koordination vorliegt.

Zusätzlich zu den echten Aluminiumsilikaten können auch weitere Al/Si Verbindungen anwesend sein, in welchen A1 - im Gegensatz zu den echten Aluminiumsilikaten - auch Si-Gitterplätze besetzt (sog. Alumosilicate oder Aluminosilicate, wie z.B. Zeolithe, Feldspäte, Phyllo- und Ionosilikate (siehe unten)), und/oder auch trimorphe Aluminiumsilikate (wie z.B. Andalusit, Lillimanit und Cynait) und/oder Mullit (siehe unten).

Die Zusammensetzungen gemäss der vorliegenden Erfindung erfüllen auch die gängigen Anforderung an Prozessmaterialien im Automobilbau, wie z.B. in *"*Paint and Surface Coatings" 1987, Kapitel 10 und 11 (Herausgeber: R. Lambourne; Verlag: Ellis Horwood; ISBN-10: 0853126925) beschrieben; diese Anforderungen werden durch Bezugnahme in die vorliegende Offenbarung eingeschlossen. Erfindungsgemässe Zusammensetzungen weisen also insbesondere auf: (1.) Eine hinreichend grosse Elastizität, um Abplatzen bei Verwindungen der Karosserie oder bei Materialbelastung bei Temperaturen unterhalb des Gefrierpunkts zu vermeiden; (2.) Niedrige Emissionswerte während der Verarbeitung und der Lebensdauer der Fahrzeuge. Weitere Anforderungen betreffen: (3.) Beständigkeit gegenüber mechanischen Belastungen wie z.B. Druckbelastung durch Fahrzeuginsassen, insbesondere bei hohen Temperaturen im Zusammenhang mit hoher Luftfeuchtigkeit; sowie (4.) die Prozessfähigkeit hinsichtlich der vollautomatisierten Applikation wie z.B. Druckbeständigkeit in Rohrleitungen, Pumpbarkeit und Spritzbarkeit.

Überraschend wurde gefunden, dass durch die geeignete Wahl der Gasbeladung, wie vorstehend beschrieben, der Einbrenneffekt eliminiert werden kann, insbesondere bei einer Aufheizrate von etwa > 10°C/min, insbesondere um etwa 30°C/min, von Raumtemperatur auf etwa 180°C. Insbesondere kann durch die zusätzliche Anwesenheit der vorstehend genannten Füllstoffe auch die Schichtdickenzunahme drastisch gemindert werden, typischerweise unter 50%.

Weiterhin wurde überraschend festgestellt, dass auch nach der Applikation und einer mehrstündigen bzw. mehrtägigen Liegezeit der Beschichtung jederzeit das blasen- und rissfreie Einbrennen gewährleistet werden kann. Diese sog. "Standzeit" oder auch "offene Zeit" vor dem Einbrennen gewährleistet die Prozesssicherheit der erfindungsgemässen Zusammensetzung im Serienbetrieb. Bei nicht erfindungsgemässen Produkten bildet sich hingegen nach einer gewissen Zeit ein Film an der Oberfläche. Dann besteht die Gefahr der Blasen- und Rissbildung durch verdampfendes, eingeschlossenes Wasser. In der Praxis der Automobilproduktion können Standzeiten oftmals nicht exakt eingehalten werden, da Produktionsunterbrechungen durch Bandstillstand jederzeit auftreten können.

In besonders bevorzugten Ausführungsformen weist der Aluminiumsilikat basierte Füllstoff eine mittlere Korngrösse (definiert als mittlere Korngrösse (d50), entspricht dem bei einem Siebdurchgang von 50% zugehörigen Korndurchmesser und lässt sich berechnen oder aus der Korngrössenverteilung ablesen) von mehr als 4µm, bevorzugt im Bereich von 1µm bis 10um, besonders bevorzugt im Bereich von 4µm bis 10µm; hierbei ist der Füllstoff im wesentlichen kugelförmig.

Gemäss einer weiteren bevorzugten Ausführungsform weist der Aluminiumsilikat-basierte Füllstoff neben 55 Gew.% bis 90 Gew.%, vorzugsweise 60 Gew.% bis 85 Gew.%, besonders bevorzugt 65 Gew.% bis 80 Gew.% echten Aluminiumsilikaten weiter 10 Gew.% bis 35 Gew.%, vorzugsweise 12.5 Gew.% bis 32.5 Gew.%, besonders bevorzugt 15 Gew.% bis 30 Gew. % Mullit (Al₄₊₂ₓSi₂₋₂ₓO₁₀₋ₓ) auf; vorzugsweise weist der Mullit hierbei eine Zusammensetzung von 3 Al₂O₃ * 2 SiO₂ bis 2 Al₂O₃ * SiO₂ auf.

Vorteilhaft handelt es sich bei dem Aluminiumsilikat-basierten Füllstoff um ein synthetisches, festes, kugelförmiges, geschmolzenes, glasartiges Aluminiumsilikat, das bei der Kohleverbrennung als Flugasche anfällt; besonders bevorzugt sind die Bestandteile dieses Füllstoffs nicht trennbar. Ein derzeit besonders bevorzugter Füllstoff im Rahmen der vorliegenden Erfindung, welcher die vorstehenden Anforderungen erfüllt, ist OMEGA-SIL^{®} (Omega Minerals, DE-22848 Norderstedt), ein Eisen-Aluminiumsilikat mit einem Fe₂O₃-Anteil von etwa 2,9%.

Als besonders geeignete Füllstoffe bzw. - falls die vorstehenden Massgaben an den Füllstoff nicht ohne weiteres erfüllt werden - als Grundlage für einen solchen Füllstoff haben sich Flugaschen erwiesen, wie sie bspw. als Zuschlagstoff in der Betonherstellung Verwendung finden (vergl. DE 120 36 58, DE 28 01 687, DE 27 58 820, DE 15 71 375). Flugaschen sind feine, von den Rauchgasen einer Feuerung mitgerissene, nicht brennbare Bestandteile eines Brennstoffs. Gemäss DIN EN 450 ist Flugasche ein feinkörniger Staub, der hauptsächlich aus kugelförmigen, glasartigen Partikeln besteht, bei der Verbrennung feingemahlener Kohle anfällt, puzzolanische Eigenschaften hat und im wesentlichen aus SiO₂ und Al₂O₃ besteht. Der Gehalt an wirksamem SiO₂ (also freies, nicht in Silikatkristalle eingebautes SiO₂) wie er gemäss EN 197-1:2000 festgelegt und bestimmt wird, beträgt mindestens 25% Massenanteil.

Weiter vorteilhaft enthält die erfindungsgemässe Beschichtungsmasse den Aluminiumsilikat-basierten Füllstoff in einem Anteil von 5 Gew.% bis 35 Gew.%, bevorzugt von 10 Gew.% bis 30 Gew.%, besonders bevorzugt von 20 Gew.%.

Zusätzlich kann die erfindungsgemässe Beschichtungsmasse einen weiteren, nadelförmigen und/oder faserigen Füllstoff enthalten. Hierbei handelt es sich vorzugsweise um ein Inosilikat, insbesondere ausgewählt aus der Strunz-Klasse VIII/F.18 und/oder der Dana Klasse 65.2.1, vorzugsweise ein Wollastonit. Ohne den Gegenstand der Erfindung dadurch beschränken zu wollen, scheint ein derartiger Füllstoff einen Kapillareffekt zu bewirken, welcher die Verdampfung des Wassers aus der Beschichtungsmasse kanalisiert und die Vermeidung des vorstehend beschriebenen Einbrenneffekts weiter unterstützt.

Der derzeit bevorzugt eingesetzte Wollastonit ist KEMOLIT^{®} bzw. HYCON^{®} von Heinrich Osthoff-Petrasch GmbH, D-Nordersted, Typ S3 (Aspekt Ratio 1:10 bis 1:15) mit 0% Siebrückstand bei 63 µm Siebmaschenweite nach Siebanalyse ISO 3310/1.

Der weitere, nadelförmige und/oder faserige Füllstoff, insbesondere der Wollastonit ist hierbei vorzugsweise in einem Anteil von 5 Gew.% bis 25 Gew.%, bevorzugt von 10 Gew.% bis 20 Gew.%, besonders bevorzugt von 15 Gew.% in der erfindungsgemässen Beschichtungsmasse enthalten.

Die erfindungsgemässe Beschichtungsmasse kann vorteilhaft zudem ein organisches Lösungsmittel in einem Anteil von etwa 1 Gew.% bis etwa 10 Gew.%, bevorzugt von etwa 2 Gew.% bis etwa 6 Gew.%, besonders bevorzugt von etwa 3 Ges.% enthalten, wobei das Lösungsmittel einen Siedepunkt von insbesondere grösser als etwa 245°C aufweist. Ein derartiges Lösungsmittel verdampft unter den gängigen Bedingungen der Durchlauföfen in der Automobilindustrie nicht, sondern konzentriert sich an der Oberfläche auf. Hierdurch ergeben sich für das verdampfende Wasser Austrittsbereiche, wodurch der vorne beschriebene Einbrenneffekt, also das Aufwerfen von Blasen, weiter unterdrückt werden kann. Geeignete Lösungsmittel sind bspw. in US 6,340,519 B1 und JP 02-281081 A beschrieben, deren Beschreibung diesbezüglich in die vorliegende Offenbarung durch Bezugnahme eingeschlossen wird.

Die erfindungsgemässe Beschichtungsmasse enthält weiter vorzugsweise ein Bindemittel auf Basis einer wässrigen Poly(meth)acrylat-Dispersion, vorzugsweise in einer derartigen Menge, dass ein Poly(meth)acrylat-Anteil in der Beschichtungsmasse nach Verdunstung des Wassers von 10 Gew.% bis 20 Gew.%, bevorzugt von 12.5 Gew.% bis 17.5 Gew.%, besonders bevorzugt von 15 Gew.% resultiert. Geeignete Poly(meth)acrylat-Dispersionen sind im Stand der Technik zur Verwendung in gattungsgemässen Beschichtungsmassen hinlänglich bekannt, bspw. aus DE 601 09 152 T2; EP 1 282 672 B1; US 6,686,033 B1; US 4,739,019; *"*Dispersionen und Emulsionen" 1997, Kapitel 6 (Autoren: G. Lagaly, O. Schulz und R. Zimehl; Verlag: Steinkopff-Verlag Darmstadt; ISBN-10: 3798510873); *"*Paint and Surface Coatings" 1987 (Herausgeber: R. Lambourne; Verlag: Ellis Horwood; ISBN-10: 0853126925); die vorstehenden Literaturstellen werden bezüglich geeigneter Poly(meth)acrylat-Dispersionen in die vorliegende Offenbarung durch Bezugnahme eingeschlossen.

Besonders bevorzugt enthält die Beschichtungsmasse im Nasszustand 15 Gew.% bis 30 Gew.%, bevorzugt 15 Gew.% bis 25 Gew.%, besonders bevorzugt 18 Gew.% bis 20 Ges.% Wasser. Oberhalb eines Gehalts von etwa 30 Gew.% Wasser lässt die Kontrollierbarkeit des Einbrenneffekts bei Verwendung der Beschichtungsmasse in gängigen Durchlauföfen der Automobilindustrie spürbar nach; unterhalb von 15 Gew.% sinkt die Stabilität der Dispersion rapide.

Weiter vorteilhaft kann die erfindungsgemässe Beschichtungsmasse einen wasserrückhaltenden Füllstoff enthalten, insbesondere ein hydrophobes Polysaccharid, vorzugsweise eine Cellulose und/oder eine Stärke, wie in JP05331387 und JP05032938 beschrieben. Ein derartiger hydrophober Füllstoff quillt - und bindet damit Wasser - bei erhöhter Temperatur, wodurch das Verdampfen des Wassers weniger rapide erfolgt und so die vorstehend beschriebene Blasenbildung weiter kontrolliert werden kann.

Weiter vorteilhaft kann die erfindungsgemässe Beschichtungsmasse einen Pulverlack, bevorzugt einen Epoxidpulverlack, enthalten. Geeignete Pulverlacke sind als solche bspw. aus EP 509 392 A1, EP 509 393 B1, EP 322 827 B1, EP 517 536 A1, US 4,849,283, US 5,055,524 sowie aus *"*Paint and Surface Coatings" 1987 (Herausgeber: R. Lambourne; Verlag: Ellis Horwood; ISBN-10: 0853126925) bekannt; die Beschreibung der vorstehenden Dokumente wird bezüglich geeigneter Pulverlacke durch Bezugnahme in die vorliegende Offenbarung eingeschlossen.

Es hat sich überraschend gezeigt, dass durch den Zusatz eines Epoxidpulverlacks die Schwitzwasserbeständigkeit einer aufgetragenen, insbesondere einer vorstehend beschriebenen erfindungsgemässen Beschichtungsmasse deutlich verbessert werden kann. Die Schwitzwasserbeständigkeit wird hierbei durch Lagerung von Prüfkörpern über 10 Tage bei 40°C und 100% relativer Luftfeuchtigkeit oder vorzugsweise dem Kondenswasserklimatest nach DIN 50017 bestimmt .

Selbstverständlich kann die erfindungsgemässe Beschichtungsmasse weitere übliche Additive wie z.B. Verdicker, Rheologieadditive, Dispergiermittel, Netzmittel, Emulgatoren, Farbstoffe, Pigmente, Entschäumer, Konservierungsmittel, Weichmacher, Antifrostmittel, Additive zur Modifizierung des pH Wertes und Lösungsmittel enthalten. Spezifische Verbindungen dieser Additiv-Klassen sind in Ihrer Anwendung nicht auf ihre typische Funktion limitiert, sondern können generell in der erfindungsgemässen Beschichtungsmasse verwendet werden, um die gewünschten Eigenschaften zu erzielen oder zu verbessern. Konkret werden genannt:

Pigmente, Pigmentdispersionen oder Farbstoffe zur Einfärbung der erfindungsgemässen Beschichtungsmasse, wie z.B. die kommerziell erhältlichen Produkte der Luconyl^{®} Reihe der Firma BASF, z.B. Luconyl^{®} Rot 3855, Produkte der Firma SIOF oder Produkte der Akrosperse^{®} Reihe der Firma Akrochem. Typischerweise jeweils in Anteilen von 0.1 Ges.% bis 0.5 Gew.%.

Organische oder mineralische Rheologiemodifikatoren, wie z.B. Acrylatverdicker der Acrysol Reihe der Firma Rohm & Haas, z.B. Acrysol^{®} TT-615 oder die Produkte der Rheolate^{®} Reihe der Firma Elementis, Polyurethanverdicker der Tafigel^{®} Reihe der Firma Münzing oder die Produkte der DSX^{®} Reihe der Firma Cognis, Celluloseverdicker der Tylose^{®} Reihe der Firma Clariant, Schichtsilikate der Bentone^{®} Reihe der Firma Elementis oder der Laponite^{®} Reihe der Firma Rockwood oder Kieselsäuren der Cabosil^{®} Reihe der Firma Cabot oder der Aerosil^{®} Reihe der Firma Degussa. Typischerweise jeweils in Anteilen von 0.3 Gew.% bis 5-0 Gew.%.

Weichmacher zur Flexibilisierung, wie z.B. Adipinsäureweichmacher, Benzoatweichmacher, Sulfonamidweichmacher Phthalatweichmacher, Sulfonsäureesterweichmacher und Phosphatweichmacher. Handelsübliche Produkte sind bspw. Hexamol^{®}, Unimoll^{®}, Ultramoll^{®} und Mesamoll^{®} Produkte der Firma Lanxess, z.B. Mesamoll^{®} II oder Vestinol^{®} Produkte der Firma Degussa. Typischerweise jeweils in Anteilen von 0.2 Gew.% bis 5 Gew.%.

Dispergierhilfsmittel und Netzmittel zur Dispergierung und Benetzung der Füllstoffe, Dispersionen und Additive, usw. Nützliche Dispergierhilfsmittel beinhalten z.B. Polyacryl-säuren, organische sowie anorganische Phosphate, Polyurethane, Fettsäureester und Ehylenoxid-Propylenoxid Copolymere. Handelsübliche Produkte beinhalten Metolat^{®} 514 der Firma Münzing und Ultra-dispers^{®} der Firma BASF. Typischerweise jeweils in Anteilen von 0.2 Gew.% bis 3 Gew.%.

Füllstoffe, die das Flächengewicht signifikant erhöhen wie bspw. BaSO₄, Eisenglimmer oder Magnetit, typischerweise in einem Anteil von 5 Gew.% bis 40 Gew.%.

Anorganische oder organische Füllstoffe wie z.B. Calciumcarbonat, Kaolin, Silikate, Flugasche, Glas, Talkum, Glimmer, Titandioxid, Magnesiumcarbonat, Aluminiumhydroxid, Schiefer, Russ, Graphit, Eisenoxid, Siliziumdioxid, Kieselgur, mikronisiertes Polyamid, Polyvinylacetat, Poly(meth)acrylate, Polyester, Polyethylen oder Polypropylen. Insbesondere die vorgenannten Füllstoffe können im Rahmen von Routineversuchen leicht derart ausgewählt und/oder in einer derartigen Menge in die Beschichtungsmasse eingearbeitet werden, dass bei einem flächigen Auftrag im Nasszustand in einer Schichtdicke von etwa 3mm und Überführung in den Trockenzustand durch Erhitzung auf etwa 160°C die Schichtdicke lediglich um weniger als 60%, vorzugsweise um weniger als 50%, besonders bevorzugt um weniger als 40% zunimmt.

Ein weiterer Aspekt der vorliegenden Erfindung betrifft also ein Verfahren zur Herstellung einer Beschichtungsmasse für den Automobilbau, umfassend die Hinzufügung einer Gasbeladung im Nasszustand von 5 Vol.% bis 60 Vol.%, vorzugsweise von 10 Vol.% bis 50 Vol.%, besonders bevorzugt von 15 Vol.% bis 40 Vol.%; und/oder eines Aluminiumsilikat-basierten Füllstoffs; und/oder eines Inosilikats, insbesondere ausgewählt aus der Strunz-Klasse VIII/F.18 und/oder der Dana Klasse 65.2.1; und/oder eines Epoxidpulverlackes.

In einem weiteren Aspekt betrifft die Erfindung ein Verfahren zur Dämpfung der Schallübertragung im Automobilbau, umfassend das Auftragen einer vorstehend beschriebenen Beschichtungsmasse auf die Karosserie oder ein anderes Fahrzeugein- bzw. anbauteil.

Die Erfindung betrifft weiter die Verwendung einer Gasbeladung im Nasszustand von 5 Vol.% bis etwa 60 Vol.%, vorzugsweise von 10 Vol.% bis 50 Vol.%, besonders bevorzugt von etwa 15 Vol.% bis etwa 40 Vol.%.; und/oder eines Aluminiumsilikat-basierten Füllstoffs; und/oder eines Inosilikats, insbesondere ausgewählt aus der Strunz-Klasse VIII/F.18 und/oder der Dana Klasse 65.2.1 als Zuschlagsstoff in einer Beschichtungsmasse für den Automobilbau, zur Verringerung, insbesondere zur Vermeidung der Blasenbildung beim Übergang vom Nasszustand in den Trockenzustand der Beschichtungsmasse, bei einer Aufheizrate von Raumtemperatur auf 180°C von > 10°C/min, insbesondere um 30°C/min.

Ein weiterer Aspekt der vorliegenden Erfindung betrifft ein mit einer vorstehend beschriebenen Beschichtungsmasse zumindest teilweise beschichtetes Substrat, insbesondere eine Fahrzeugkarosserie oder Teile davon.

Die Erfindung wird nachfolgend anhand eines Ausführungsbeispiels näher erläutert, ohne den Gegenstand der Erfindung auf dieses Beispiel zu beschränken. Es zeigen:
- Fig. 1:: flächig aufgetragene Beschichtungsmasse mit Luftbeladung (Beispiel A) nach Trocknung unter DurchlaufofenBedingungen;
- Fig. 2:: flächig aufgetragene Beschichtungsmasse ohne Luftbeladung (Beispiel A) nach Trocknung unter DurchlaufofenBedingungen;
- Fig. 3:: flächig aufgetragene Beschichtungsmasse mit Luftbeladung (Beispiel B) nach Trocknung unter DurchlaufofenBedingungen;
- Fig. 4:: flächig aufgetragene Beschichtungsmasse ohne Luftbeladung (Beispiel B) nach Trocknung unter DurchlaufofenBedingungen.

Es wurden die folgenden Beschichtungsmassen hergestellt:

| **Tabelle 1** (Rezepturen) | | | |
|---|---|---|---|
| **#** | **Rohstoff** | **Beispiel A** | **Beispiel B** |
| 1 | Albucril^{®} AC 847 | 12,00 | 12,00 |
| 2 | Mowilith^{®} LDM 6119 | 10,00 | 10,00 |
| 3 | Wasser | 6,00 | 6,00 |
| 4 | Lucony^{®} G Schwarz 0066 | 0,20 | 0,20 |
| 5 | Diethylenglycol | 3,45 | 3,45 |
| 6 | Deuteron ND 953 | 1,00 | 1,00 |
| 7 | Hycon^{®} S3 | 15,00 | 15,00 |
| 8 | Bariumsulfat | 23,00 | 23,00 |
| 9 | Omega SIL^{®} M | 0 | 20,00 |
| 10 | Kreide | 20,00 | 0 |
| 11 | Epoxid Pulverlack | 5,00 | 5,00 |
| 12 | Stärke | 3,00 | 3,00 |
| 13 | Wasser | 0,65 | 1,00 |
| 14 | Acrysol^{®} TT-615 | 0,50 | 0,15 |
| 15 | Hydropalat^{®} 875 | 0,20 | 0,20 |

| | | | |
|---|---|---|---|
| Alle Angaben in Gew.% | | | |

**Herstellerverzeichnis:**

| | |
|---|---|
| Albucril^{®} AC 847 | Noveon |
| Mowilith^{®} LDM 6119 | Celanese |
| Luconyl^{®} G Schwarz 0066 | BASF |
| Diethylenglycol | Fluka |
| Deuteron ND 953 | Deuteron |
| Hycon^{®} S3 | Osthoff & Petrasch |
| Bariumsulfat | Sachtleben |
| Omega SIL^{®} M | Omega Minerals |
| Kreide | Omya |
| Epoxid Pulverlack | Rohm & Haas |
| Stärke | Emsland Stärke |
| Acrysol^{®} TT-615 | Rohm & Haas |
| Hydropalat^{®} 875 | Cognis |

Die Unterschiede in den Positionen #13 und #14 erklären sich durch das unterschiedliche rheologische Verhalten der Kreide in Beispiel A gegenüber der Flugasche in Beispiel B. Um bei Beispiel A und B eine vergleichbare Viskosität zu erzielen, ist es notwendig, die Menge des Verdickers (#14) in Beispiel B zu reduzieren. Dadurch werden die beanspruchten Eigenschaften der erfindungsgemässen Beschichtungsmasse nicht beeinflusst.

Die Herstellung erfolgte gemäss folgendem Protokoll: Die Dispersionsanteile #1 und #2 werden in einen Behälter gegeben und mit einem handelsüblichen Dissolver bei niedriger Drehzahl gemischt. Anschliessend werden die Additive #3 bis #6 zugegeben und eingemischt. Daraufhin wird der Füllstoffanteil #7 bis #12 zugegeben und homogen dispergiert. Anschliessend werden die Additive #13 bis #15 zugegeben und eingemischt. Sind alle Bestandteile der Rezeptur zugegeben, so wird mittels Dissolver solange Luft eingemischt bis die gewünschte Luftbeladung erzielt ist. Ermittelt wird die Luftbeladung über die bekannte Dichte der Zusammensetzung und das Volumen (siehe vorne).

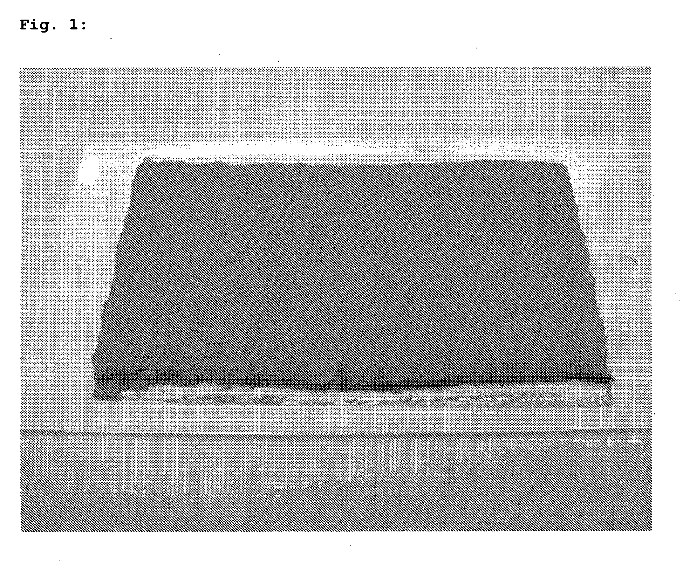

In Fig. 1 ist die Beschichtungsmasse nach Beispiel A mit einer Luftbeladung von 40% in einer Dicke von etwa 3mm auf ein Blech aufgetragen. Nachfolgend wurde die Trocknung im Durchlaufofen vorgenommen, bestehend aus PVC Vorgelierofen, simuliert durch Erhitzung des beschichteten Bleches von Raumtemperatur mit einer Aufheizrate von etwa 30°C/min auf eine Temperatur von etwa 160°C. Anschliessend wurde die Oberflächenstruktur visuell geprüft. In Fig. 1 ist keine Blasenbildung erkennbar; der Einbrenneffekt wurde eliminiert. Allerdings beträgt die Zunahme der Dicke der Beschichtung bei der Trocknung noch 57%.

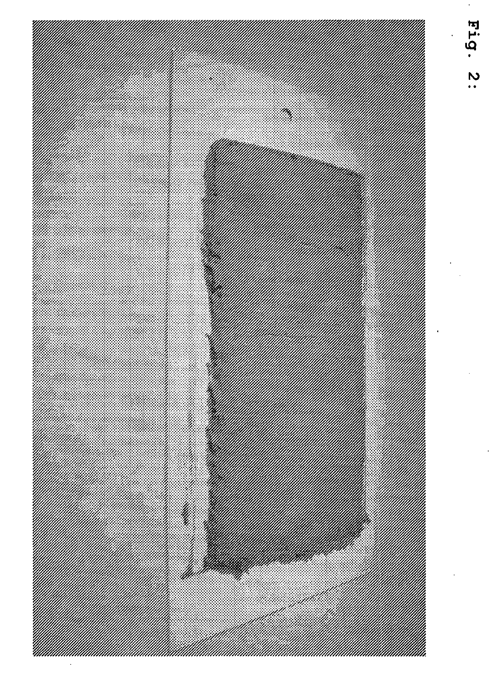

In Fig. 2 wurde der identische Versuchsaufbau mit der Zusammensetzung nach Beispiel A durchfahren, jedoch wurde die Beschichtungsmasse vor dem Auftragen 5min bei 100mbar evakuiert und wies danach eine Luftbeladung von 0% auf. Anschliessend wurde die Oberflächenstruktur visuell geprüft. In Fig. 2 ist der vorstehend beschriebene Einbrenneffekt deutlich erkennbar durch Risse, Aufwerfungen und Blasen.

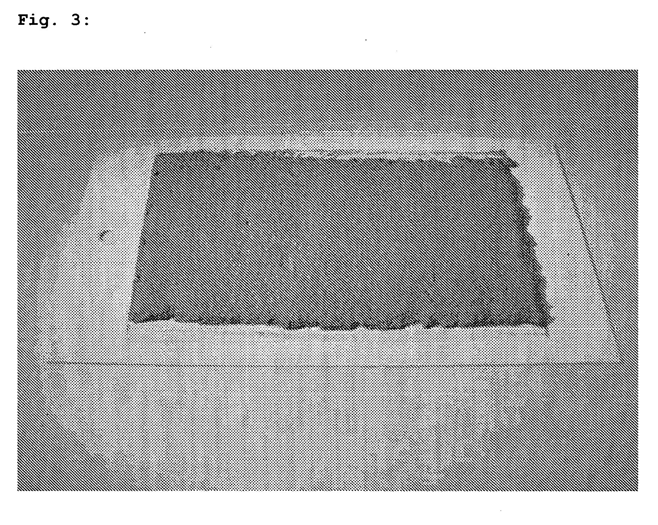

In Fig. 3 wurde der identische Versuchsaufbau mit der erfindungsgemässen Zusammensetzung nach Beispiel B, mit einer Luftbeladung von 40%, durchfahren: In Fig. 3 ist keinerlei Blasenbildung erkennbar; der Einbrenneffekt wurde eliminiert. Zudem konnte die Zunahme der Dicke der Beschichtung bei der Trocknung drastisch reduziert werden, hier auf nur noch 30%. Es zeigt sich, dass insbesondere die Kombination von geeigneter Luftbeladung und eines die Blasenbildung verringernden Füllstoffs zu besonders vorteilhaften Ergebnissen führt.

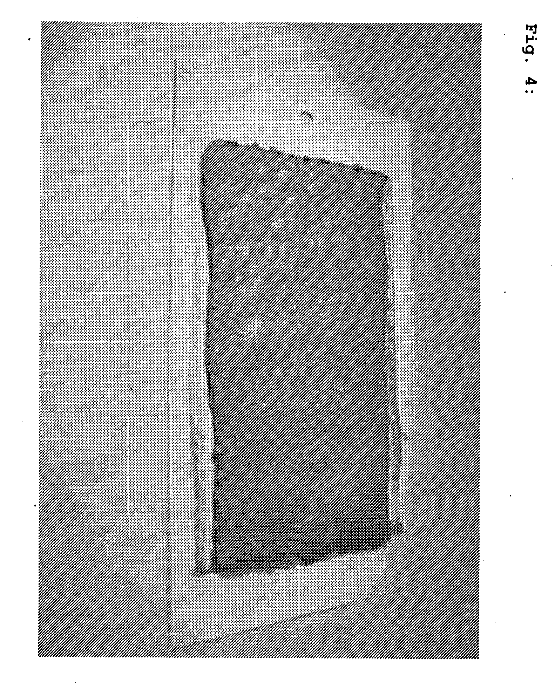

In Fig. 4 wurde der identische Versuchsaufbau mit der erfindungsgemässen Zusammensetzung nach Beispiel B durchfahren, jedoch wurde die Beschichtungsmasse vor dem Auftragen 5min bei 100mbar evakuiert und wies danach eine Luftbeladung von 0% auf. Anschliessend wurde die Oberflächenstruktur visuell geprüft. In Fig. 4 ist der vorstehend beschriebene Einbrenneffekt deutlich erkennbar durch Aufwerfungen und Blasen.

| **Tabelle 2** (Ergebnisse) | | | | |
|---|---|---|---|---|
| | **Luftbeladung [%]** | **Schichtdicke trocken [mm]** | **Schichtdicke Δ [%]** | **visuelle Beurteilung** |
| Beispiel A (Fig. 1) | 40 | 4,7 | 57 | i.O. |
| Beispiel A (Fig. 2) | 0 | n.b. | n.b. | Blasen, Risse |
| Beispiel B (Fig. 3) | 40 | 3,9 | 30 | i.O. |
| Beispiel B (Fig. 4) | 0 | n.b. | n.b. | Blasen |

| | | | | |
|---|---|---|---|---|
| n.b., (wegen der Blasenbildung) nicht bestimmt | | | | |

Zusammenfassend lässt sich feststellen, dass durch die erfindungsgemässe Beschichtungsmasse mit Luftbeladung der beschriebene Einbrenneffekt (Blasenbildung) verhindert wird, wobei insbesondere durch die Beigabe eines die Blasenbildung reduzierenden Füllstoffs (insbesondere Flugasche) auch die Schichtdickenzunahme drastisch reduziert werden kann.

## Patentansprüche

1. Beschichtungsmasse für den Automobilbau, mit einer Gasbeladung im Nasszustand von etwa 5 Vol.% bis etwa 60 Vol.%,

2. Beschichtungsmasse gemäss Anspruch 1, enthaltend einen die Schichtdickenzunahme beim Übergang vom Nasszustand in den Trockenzustand verringernden Füllstoff.

3. Beschichtungsmasse gemäss Anspruch 1 oder 2, mit einem Aluminiumsilikat-basierten Füllstoff mit einer mittleren Korngrösse von mehr als 4µm

4. Beschichtungsmasse gemäss Anspruch 3, **dadurch gekennzeichnet, dass** der Aluminiumsilikat-basierte Füllstoff neben 55 Gew.% bis 90 Gew.% echtem Aluminiumsilikat weiter 10 Gew.% bis 35 Gew.% Mullit aufweist.

5. Beschichtungsmasse gemäss einem der Ansprüche 2 bis 4, **dadurch gekennzeichnet, dass** es sich bei dem Aluminiumsilikat-basierten Füllstoff um ein synthetisches, festes, kugelförmiges, geschmolzenes, glasartiges Aluminiumsilikat handelt.

6. Beschichtungsmasse gemäss einem der Ansprüche 2 bis 5, enthaltend den Aluminiumsilikat-basierten Füllstoff in einem Anteil von 5 Gew.% bis 35 Gew. %,

7. Beschichtungsmasse gemäss einem der Ansprüche 1 bis 6, weiter enthaltend einen, nadelförmigen und/oder faserigen Füllstoff.

8. Beschichtungsmasse gemäss Anspruch 7, **dadurch gekennzeichnet, dass** es sich bei dem weiteren Füllstoff um ein Inosilikat handelt

9. Beschichtungsmasse gemäss einem der Ansprüche 7 oder 8, **dadurch gekennzeichnet, dass** der Füllstoff ein Wollastonit ist mit einem Seitenverhältnis von 1:10 bis 1:15 sowie 0% Siebrückstand bei 250 µm Siebmaschenweite nach Siebanalyse gemäss ISO 3310/1.

10. Beschichtungsmasse gemäss einem der Ansprüche 7 bis 9, **dadurch gekennzeichnet, dass** der weitere Füllstoff in einem Anteil von 5 Gew.% bis 25 Ges.% enthalten ist.

11. Beschichtungsmasse gemäss einem der Ansprüche 1 bis 10, weiter im Nasszustand enthaltend ein organisches Lösungsmittel in einem Anteil von 1 Gew.% bis 10 Gew.% wobei das Lösungsmittel einen Siedepunkt von grösser als 245°C aufweist.

12. Beschichtungsmasse gemäss einem der Ansprüche 1 bis 11, weiter enthaltend ein Bindemittel auf Basis einer wässrigen Poly(meth)acrylat-Dispersion.

13. Beschichtungsmasse gemäss einem der Ansprüche 1 bis 12, **dadurch gekennzeichnet, dass** sie im Nasszustand 15 Gew.% bis 30 Gew.% Wasser enthält.

14. Beschichtungsmasse gemäss einem der Ansprüche 1 bis 13, weiter enthaltend einen wasserrückhaltenden Füllstoff

15. Beschichtungsmasse für den Automobilbau gemäss einem der Ansprüche 1 bis 14, enthaltend einen Epoxidpulverlack.

16. Beschichtungsmasse gemäss einem der Ansprüche 1 bis 15, enthaltend wenigstens einen weiteren Zuschlagsstoff ausgewählt aus der Gruppe umfassend Verdicker, Rheologieadditive, Dispergiermittel, Netzmittel, Emulgatoren, Pigmente, Entschäumer, Konservierungsmittel, Weichmacher, Antifrostmittel, Additive zur Modifizierung des pH Wertes und Lösungsmittel.

17. Beschichtungsmasse gemäss einem der Ansprüche 1 bis 16, **dadurch gekennzeichnet, dass** der/die Füllstoff(e) derart ausgewählt und/oder in einer derartigen Menge enthalten ist/sind, dass bei einem flächigen Auftrag im Nasszustand in einer Schichtdicke von 3mm und Überführung in den Trockenzustand durch Erhitzung auf 160°C die Schichtdicke lediglich um weniger als 60% zunimmt.

18. Verfahren zur Herstellung einer Beschichtungsmasse für den Automobilbau, umfassend die Hinzufügung
- einer nicht auf einem physikalischen oder chemischen Expansionsmittel basierenden Gasbeladung im Nasszustand von 5 Vol.% bis 60 Vol.%

19. Verfahren zur Dämpfung der Schallübertragung im Automobilbau, umfassend das Auftragen einer Beschichtungsmasse gemäss einem der Ansprüche 1 bis 17.

20. Verwendung
- eines Gasbeladung im Nasszustand von 5 Vol.% bis 60 Vol.% als Zuschlagsstoff in einer Beschichtungsmasse für den Automobilbau, zur Verringerung der Blasenbildung beim Übergang vom Nasszustand in den Trockenzustand der Beschichtungsmasse, bei einer Aufheizrate von Raumtemperatur auf 180°C von > 10°C/min

21. Mit einer Beschichtungsmasse gemäss einem der Ansprüche 1 bis 17 zumindest teilweise beschichtetes Substrat

## Claims

1. Coating material for automotive engineering, having a gas loading in the wet state of about 5% to about 60% by volume.

2. Coating material according to Claim 1, comprising a filler which reduces the increase in layer thickness on transition from the wet state to the dry state.

3. Coating material according to Claim 1 or 2, having an aluminium silicate-based filler having an average particle size of more than 4 µm.

4. Coating material according to Claim 3, **characterized in that** the aluminium silicate-based filler contains 55% to 90% by weight of true aluminium silicate and 10% to 35% by weight of mullite.

5. Coating material according to any one of Claims 2 to 4, **characterized in that** the aluminium silicate-based filler is a synthetic, solid, spherical, melted, vitreous aluminium silicate.

6. Coating material according to any one of Claims 2 to 5, containing the aluminium silicate-based filler in a fraction of 5% to 35% by weight.

7. Coating material according to any one of Claims 1 to 6, further comprising an acicular and/or fibrous filler.

8. Coating material according to Claim 7, **characterized in that** the further filler is an inosilicate.

9. Coating material according to either of Claims 7 and 8, **characterized in that** the filler is a wollastonite having an aspect ratio of 1:10 to 1:15 and 0% sieve residue at 250 µm mesh size on sieve analysis in accordance with ISO 3310/1.

10. Coating material according to any one of Claims 7 to 9, **characterized in that** the further filler is present in a fraction of 5% to 25% by weight.

11. Coating material according to any one of Claims 1 to 10, further comprising in the wet state an organic solvent in a fraction of 1% to 10% by weight, the solvent having a boiling point of greater than 245°C.

12. Coating material according to any one of Claims 1 to 11, further comprising a binder based on an aqueous poly(meth)acrylate dispersion.

13. Coating material according to any one of Claims 1 to 12, **characterized in that** in the wet state it contains 15% to 30% by weight of water.

14. Coating material according to any one of Claims 1 to 13, further comprising a water-retaining filler.

15. Coating material for automotive engineering according to any one of Claims 1 to 14, comprising an epoxy powder coating material.

16. Coating material according to any one of Claims 1 to 15, comprising at least one further adjuvant selected from the group encompassing thickeners, rheological additives, dispersants, wetting agents, emulsifiers, pigments, defoamers, preservatives, plasticizers, anti-freeze agents, pH modifier additives and solvents.

17. Coating material according to any one of Claims 1 to 16, **characterized in that** filler(s) is/are selected such, and/or is or is/are present in an amount such, that, when applied areally in the wet state in a layer thickness of 3 mm and converted to the dry state by heating at 160°C, the layer thickness increases only by less than 60%.

18. Process for preparing a coating material for automotive engineering, comprising the addition
- of a gas loading, not based on a physical or chemical expansion means, of 5% to 60% by volume in the wet state.

19. Method of attenuating the transmission of sound in automotive engineering, comprising the application of a coating material according to any of Claims 1 to 17.

20. Use of a gas loading in the wet state of 5% to 60% by volume as an adjuvant in a coating material for automotive engineering for the purpose of reducing the formation of bubbles on transition from the wet state to the dry state of the coating material, at a heating rate from room temperature to 180°C of > 10°C/min.

21. Substrate coated at least partly with a coating material according to any one of Claims 1 to 17.

## Revendications

1. Masse de revêtement pour l'industrie automobile avec une charge gazeuse à l'état hydraté allant d'environ 5 % en volume à environ 60 % en volume.

2. Masse de revêtement selon la revendication 1, contenant une charge réduisant l'augmentation de l'épaisseur de la couche lors de la transition entre l'état hydraté et l'état déshydraté.

3. Masse de revêtement selon la revendication 1 ou 2, avec une charge à base de silicate d'aluminium ayant des grains d'une taille moyenne supérieure à 4 µm.

4. Masse de revêtement selon la revendication 3, **caractérisée en ce que** la charge à base de silicate d'aluminium présente de 10 % en poids à 35 % en poids de mullite et de 55 % en poids à 90 % en poids de silicate d'aluminium pur.

5. Masse de revêtement selon l'une quelconque des revendications 2 à 4, **caractérisée en ce qu'**il s'agit pour la charge à base de silicate d'aluminium d'un silicate d'aluminium synthétique, solide, de forme ronde, fondu, vitrifié.

6. Masse de revêtement selon l'une quelconque des revendications 2 à 5, contenant la charge à base de silicate d'aluminium en une proportion de 5 % en poids à 35 % en poids.

7. Masse de revêtement selon l'une quelconque des revendications 1 à 6, contenant en outre une charge en forme d'aiguille et/ou de fibre.

8. Masse de revêtement selon la revendication 7, **caractérisée en ce qu'**il s'agit pour l'autre charge d'un inosilicate.

9. Masse de revêtement selon la revendication 7 ou 8, **caractérisée en ce que** la charge est une wollastonite avec un rapport d'aspect de 1:10 à 1:15 ainsi qu'un refus au tamis de 0 % pour une grandeur de maille de 250 µm après analyse du tamis selon la norme ISO 3310/1.

10. Masse de revêtement selon l'une quelconque des revendications 7 à 9, **caractérisée en ce que** l'autre charge est contenue en une proportion de 5 % en poids à 25 % en poids.

11. Masse de revêtement selon l'une quelconque des revendications 1 à 10, contenant en outre à l'état hydraté un solvant organique en une proportion de 1 % en poids à 10 % en poids, le solvant présentant un point d'ébullition supérieur à 245 °C.

12. Masse de revêtement selon l'une quelconque des revendications 1 à 11, contenant en outre un liant à base d'une dispersion de poly(méth)acrylate aqueuse.

13. Masse de revêtement selon l'une quelconque des revendications 1 à 12, **caractérisée en ce qu'**elle contient de l'eau de 15 % en poids à 30 % en poids à l'état hydraté.

14. Masse de revêtement selon l'une quelconque des revendications 1 à 13, contenant en outre une charge retenant l'eau.

15. Masse de revêtement pour l'industrie automobile selon l'une quelconque des revendications 1 à 14, contenant une peinture en poudre époxyde.

16. Masse de revêtement selon l'une quelconque des revendications 1 à 15, contenant au moins un autre additif choisi dans le groupe comprenant les épaississants, les additifs rhéologiques, les agents de dispersion, les réticulants, les émulsifiants, les pigments, les démoussants, les conservateurs, les plastifiants, les antigels, les additifs pour la modification de la valeur du pH et les solvants.

17. Masse de revêtement selon l'une quelconque des revendications 1 à 16, **caractérisée en ce que** la ou les charges sont choisies de telle façon et/ou sont présentes dans une telle quantité qu'en cas de dépôt à plat à l'état hydraté on obtient une couche d'une épaisseur de 3 mm et que la couche augmente seulement de moins de 60 % lors de la transition à l'état déshydraté du fait du chauffage à 160 °C.

18. Procédé de fabrication d'une masse de revêtement pour l'industrie automobile, comprenant l'ajout d'une charge gazeuse ne reposant pas sur un agent d'expansion physique ou chimique à l'état hydraté allant de 5 % en volume à 60 % en volume.

19. Procédé d'atténuation de la propagation sonore dans l'industrie automobile, comprenant le dépôt d'une masse de revêtement selon l'une quelconque des revendications 1 à 17.

20. Utilisation d'une charge gazeuse à l'état hydraté allant de 5 % en volume à 60 % en volume comme additif dans une masse de revêtement pour l'industrie automobile, afin de réduire la formation de bulles lors de la transition entre l'état hydraté et l'état déshydraté de la masse de revêtement, avec une vitesse de chauffage > 10 °C/minute à une température ambiante de 180 °C.

21. Substrat au moins partiellement enrobé avec une masse de revêtement selon l'une quelconque des revendications 1 à 17.
